# EUROPÄISCHE PATENTANMELDUNG

(11) **EP 1 712 941 A1**
(43) Veröffentlichungstag der Anmeldung: **18.10.2006**
(21) Anmeldenummer: 05090101.6
(22) Anmeldetag: 13.04.2005
(51) Int. Cl.: G02B 6/43, G02B 6/12, G02B 6/122

(54) **Optisches Koppelelement zur stirnseitigen optischen Kopplung der Wellenleiter eines ersten zweidimensionalen Wellenleiterarrays mit den Wellenleitern eines zweiten zweidimensionalen Wellenleiterarrays sowie optische Koppelanordnung**

(71) Anmelder: Infineon Technologies Fiber Optics GmbH, 13629 Berlin (DE)
(72) Erfinder: Kropp, Jörg-Reinhardt, 12355 Berlin (DE)
(74) Vertreter: Müller, Wolfram Hubertus

(57) **Zusammenfassung**

Bezeichnung der Erfindung: Optisches Koppelelement zur stirnseitigen optischen Kopplung der Wellenleiter eines ersten zweidimensionalen Wellenleiterarrays mit den Wellenleitern eines zweiten zweidimensionalen Wellenleiterarrays sowie optische Koppelanordnung.

Die Erfindung betrifft ein optisches Koppelelement (3) zur stirnseitigen optischen Kopplung der Wellenleiter (11, 12) eines ersten zweidimensionalen Wellenleiterarrays mit mxn Wellenleitern mit den Wellenleitern (21, 22) eines zweiten zweidimensionalen Wellenleiterarrays mit mxn Wellenleitern, wobei m≥2 und n≥2 ist und wobei die stirnseitigen Enden (15, 24) der Wellenleiterarrays winklig zueinander angeordnet sind. Erfindungsgemäß weist das Koppelement (3) eine erste Ein-/Auskoppelfläche (33) und eine zweite Ein-/Auskoppelfläche (34) auf. Die erste Ein-/Auskoppelfläche (33) und die zweite Ein-/Auskoppelfläche (34) sind durch nxm im Inneren des Koppelelements verlaufende Wellenleiter (31) miteinander verbunden sind, deren Endflächen (311) an beiden Ein-/Auskoppelflächen (33, 34) entsprechend dem Raster der nxm Wellenleiter (11-14, 21-24) der beiden ankoppelbaren Wellenleiterarrays angeordnet sind, und die derart ausgebildet sind, dass in den Wellenleitern (31) geführtes Licht auch bei großen Einkoppelwinkeln von bis zu mindestens 45° beim Durchlaufen des Wellenleiters mehrfach eine Totalreflexion erfährt. Des weiteren betrifft die Erfindung eine Koppelanordnung mit zwei zweidimensionalen Wellenleiterarrays und einem derartigen Koppelelement.

## Beschreibung

Die Erfindung betrifft ein optisches Koppelelement zur stirnseitigen optischen Kopplung der Wellenleiter eines ersten zweidimensionalen Wellenleiterarrays mit den Wellenleitern eines zweiten zweidimensionalen Wellenleiterarrays gemäß dem Oberbegriff des Anspruchs 1 sowie eine optische Koppelanordnung mit zwei zweidimensionalen Wellenleiterarrays und einem optischen Koppelelement.

Aufgrund schnell steigender Übertragungsraten in der Kommunikationstechnik werden zunehmend Daten über parallele Verbindungen übertragen. Im Bereich optischer und optoelektronischer Übertragungsverfahren werden Daten dabei parallel über eine Mehrzahl von optischen Kanälen übertragen. Dies führt bei der Verwendung optischer Leiterplatten dazu, dass in die Leiterplatten zwei oder mehrere optische Lagen von Lichtwellenleitern integriert werden, wobei jede optische Lage ein eindimensionales Array von Lichtwellenleitern umfasst. Derartige optische Leiterplatten können beispielsweise in Schaltschränken eingesetzt werden, in denen hohe Übertragungsraten zu realisieren sind und ein hohes Maß an optischer Parallelität der Datenübertragungswege vorteilhaft ist.

Allgemein besteht das Problem, zwei zweidimensionale Wellenleiterarrays optisch miteinander zu koppeln, wenn diese winklig, insbesondere senkrecht zueinander ausgerichtet sind. Ein solches Problem besteht z.B. bei der Koppelung einer Leiterplatte, die ein zweidimensionales Wellenleiterarray (auch als 2D-Leiterplatte bezeichnet) aufweist, mit einer 2D-Backplane-Leiterplatte beispielsweise eines Schaltungsschranks. Ein weiterer Anwendungsfall besteht in der Kopplung eines optischen Sende- oder Empfangsmoduls mit zweidimensional angeordneten optischen Sendern oder Empfängern an eine 2D-optische Leiterplatte. Ein dritter Anwendungsfall besteht in der Koppelung elektronischer Baugruppen (z. B. elektronischer Chips) mit zweidimensional angeordneten optischen Ein- und/oder Ausgängen an zweidimensionale optische Wellenleiterarrays.

Im Stand der Technik ist es bekannt, Board-zu-Board-Verbindungen elektrisch über hochdichte, zweidimensionale Rückwandstecker und eine aufwendige elektrische Verdrahtung über die Rückwand eines Gestellschrankes zu realisieren. Optische Verbindungen sind dagegen bisher nur für eindimensionale Arrays bekannt, wodurch die Zahl der zur Verfügung stehenden Kanäle begrenzt ist. Eine eindimensionale optische Koppelung der Kanäle eines Bauelements an ein Array von planaren Wellenleitern auf oder in einer Leiterplatte ist beispielsweise in der DE-A-100 43 353, der US 6,097,864, der EP-A-1 285 295, der DE-A-192 39 575, der US 6,257,771 und der US 6,370,292 beschrieben. Dabei werden entweder planare Wellenleiter mit integrierten Spiegeln zur senkrechten Aus- und Einkoppelung eingesetzt oder technische Lösungen mit senkrecht verlaufenden Stirnflächen der Lichtwellenleiter realisiert.

Die DE-A-102 38 741 beschreibt eine mehrlagige planare optische Komponente mit einer Vielzahl von Lichtenwellenleitern, bei der jedem Lichtwellenleiter eine Umlenkvorrichtung zugeordnet ist und die Umlenkvorrichtungen in der Projektion auf eine Ebene parallel zur Oberfläche der planaren optischen Komponente ein zweidimensionales Raster bilden. Spezielle Linsenarrays ermöglichen eine Kopplung des Lichts mit weiteren Komponenten.

Der vorliegenden Erfindung liegt die Aufgabe zugrunde, ein Koppelelement sowie eine Koppelanordnung zur Verfügung zu stellen, die in einfacher Weise eine optische Koppelung zwischen den Lichtwellenleitern eines ersten zweidimensionalen Wellenleiterarrays und den Lichtleitern eines zweiten zweidimensionalen Wellenleiterarrays zur Verfügung stellen, die winkelig, insbesondere senkrecht zueinander ausgerichtet sind.

Diese Aufgabe wird erfindungsgemäß durch ein optisches Koppelelement mit den Merkmalen des Anspruchs 1 und eine optische Koppelanordnung mit den Merkmalen des Anspruchs 10 gelöst. Bevorzugte und vorteilhafte Ausgestaltungen der Erfindung sind in den Unteransprüchen angegeben.

Danach zeichnet sich die erfindungsgemäße Lösung dadurch aus, eine erste Ein-/Auskoppelfläche und eine zweite Ein-/Auskoppelfläche des Koppelelements, die winklig zueinander ausgerichtet sind, durch nxm im Inneren des Koppelelements verlaufende Wellenleiter miteinander verbunden sind. Die Endflächen der Wellenleiter des Koppelelements sind an beiden Ein-/Auskoppelflächen entsprechend dem Raster der nxm Wellenleiter der beiden ankoppelbaren Wellenleiterarrays angeordnet. Weiter sind die Wellenleiter des Koppelelements derart ausgebildet, dass in den Wellenleitern geführtes Licht auch bei großen Einkoppelwinkeln von bis zu mindestens 45° beim Durchlaufen des Wellenleiters mehrfach eine Totalreflexion erfährt. Ein Wellenleiter des Koppelelements ist jeweils einem Wellenleiterpaar des ersten und des zweiten Wellenleiterarrays zugeordnet.

Die erfindungsgemäße Lösung ermöglicht eine optische Kopplung zwischen zweidimensionalen Arrays von Lichtwellenleitern, die winkelig zueinander angeordnet sind und insbesondere zueinander senkrecht stehende Stirnflächen aufweisen, ohne dass in die Wellenleiter Spiegel oder andere Umlenkmittel integriert werden müssen. Vielmehr wird ein spezielles Koppelelement eingesetzt, dass an die Enden der Lichtwellenleiter eines zweidimensionalen Arrays angesetzt werden kann und für eine Lichtumlenkung sämtlicher Lichtwellenleiter beider Arrays sorgt. Dies vereinfacht speziell für mehrlagige optische Leiterplatten mit integrierten Wellenleitern die Herstellung und Präparation der Ausgangsflächen.

In einer bevorzugten Ausgestaltung beträgt der Winkel zwischen der ersten und der zweiten Ein-/Auskoppelfläche 90°. Dementsprechend verlaufen die Wellenleiter des Koppelelements unter einem Winkel von 45° zu den Ein-/Auskoppelflächen, wobei die jeweiligen Endflächen der Wellenleitzer (31) einen Winkel von 90° bilden und in der Ebene der jeweiligen Ein-/Auskoppelfläche liegen.

In einer vorteilhaften Ausgestaltung der Erfindung weisen die Wellenleiter des Koppelelements jeweils entlang ihrer gesamten Länge eine umhüllende verspiegelung auf, so dass in den Wellenleitern geführtes Licht im wesentlichen unabhängig vom Einkoppelwinkeln beim Durchlaufen des Wellenleiters mehrfach eine Totalreflexion erfährt. Hierdurch wird gewährleistet, dass das aus den Wellenleitern des Wellenleiterarrays eingekoppelte Licht trotz eines in der Regel hohen Einkoppelwinkels von 45° in Wellenleitern des Koppelelements eine Totalreflexion erfährt und zwischen den Endflächen der Wellenleiter eine Richtungsumlenkung erfährt. Der Einkoppelwinkel ist dabei definiert als der Winkel zwischen der Längsachse des Wellenleiters, in den Licht eingekoppelt wird, und der Einkoppelrichtung. Die Verspiegelung bewirkt im wesentlichen, dass der Akzeptanzwinkel der Wellenleiter des Koppelelements sich 90° annähert.

Zur Realisierung der Verspiegelung bestehen die Wellenleiter des Koppelelements bevorzugt aus einem transparenten Polymermaterial oder anderen transparenten Material, das an den Außenflächen entlang seiner gesamten Länge metallisiert ist.

Die Wellenleiter des Koppelelements weisen bevorzugt einen Durchmesser derart auf, das ihre an den Ein-/Auskoppelflächen freiliegenden Endflächen im wesentlichen einen Durchmesser aufweisen, der dem Kerndurchmesser der Wellenleiter der Wellenleiterarrays entspricht. Dies ermöglicht eine gute Lichtkopplung.

Da die Wellenleiter des Koppelelements bezogen auf die Ein-/Auskoppelflächen schräg verlaufen, bedeutet dies, dass die Wellenleiter des Koppelelements eine gestauchte Querschnittsform aufweisen, die sich an der angeschrägten Stirnfläche in der Ebene der jeweiligen Ein-/Auskoppelfläche zu einer symmetrischen Form (insbesondere kreisförmig oder quadratisch) aufrichtet.

Bevorzugt verlaufen die Wellenleiter des Koppelelements alle parallel zueinander. Grundsätzlich ist es jedoch auch möglich, dass sie von der einen Ein-/Auskoppelfläche zur anderen Ein-/Auskoppelfläche divergieren. Für diesen Fall kann das Raster des einen Wellenleiterarrays durch das Koppelelement auf ein davon abweichendes Raster des anderen Wellenleiterarrays abgebildet werden.

Die Erfindung betrifft auch eine optische Koppelanordnung mit einem ersten zweidimensionalen Wellenleiterarray mit mxn Wellenleitern, einem zweiten zweidimensionalen Wellenleiterarray mit mxn Wellenleitern, wobei m≥2 und n≥2 ist und die stirnseitigen Enden der Wellenleiterarrays winklig zueinander angeordnet sind, sowie einem Koppelelement nach Anspruch 1.

Dabei ist bevorzugt zwischen der einen Ein-/Auskoppelfläche des Koppelelements und der ebenen Stirnseite des einen Wellenleiterarrays und der anderen Ein-/Auskoppelfläche des Koppelelements und der ebenen Stirnseite des zweiten Wellenleiterarrays jeweils ein Immersionsmittel vorgesehen. Hierbei handelt es sich beispielsweise um einen Kleber oder ein transparentes Vergussmaterial. Das Immersionsmittel schützt die optischen Pfade vor Staub und Verschmutzung, stellt einen optischen Ausgleich von Unregelmäßigkeiten an den involvierten Wellenleiterstirnflächen bereit und fixiert darüberhinaus das Koppelelement hinsichtlich seiner Lage.

Das Koppelelement kann als separates Teil ausgebildet sein. Ebenso ist es möglich, dass es Teil einer Koppeleinheit oder eines Funktionsteils ist, das das erste oder das zweite Wellenleiterarray umfasst.

Das erste und/oder das zweite Wellenleiterarray sind in bevorzugten Ausgestaltungen in einer mehrlagigen optischen Leiterplatte, in einem optischen Sende- oder Empfangsmodul mit zweidimensional angeordneten optischen Sendern und/oder Empfängern, oder in einer elektrischen Baugruppe mit mit zweidimensional angeordneten optischen Ein- und/oder Ausgängen realisiert.

Die Erfindung wird nachfolgend unter Bezugnahme der Figuren der Zeichnungen anhand mehrerer Ausführungsbeispiele näher erläutert. Es zeigen:
- Figur 1: ein Ausführungsbeispiel einer Koppelanordnung zur Kopplung zweier zweidimensionaler Wellenleiterarrays in Schnittansicht; und
- Figur 2a-2c: schmatisch Verfahrensschritte bei der Herstellung einer Koppelanordnung gemäß der Figur 1.

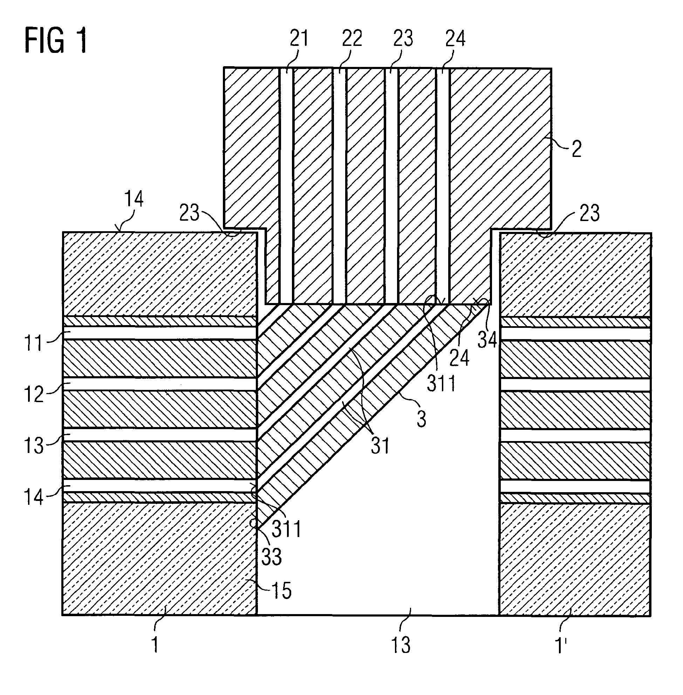

Die Figur 1 zeigt eine Koppelanordnung mit einer zweilagigen optischen Leiterplatte 1, einem wellenleitenden Funktionsteil 2 und einem optischen Koppelelement 3 zur optischen Kopplung von optischer Leiterplatte 1 und Funktionselement 2.

Die optische Leiterplatte 1 ist als vierlagige optische Leiterplatte ausgebildet, die in vier übereinander angeordneten, parallel zueinander verlaufenden Lagen jeweils ein eindimensionales Array von n Lichtwellenleitern 11, 12, 13, 14 aufweist, von denen die Schnittdarstellung der Figur 1 jeweils einen Lichtwellenleiter 11, 12, 13, 14 zeigt. Die anderen Lichtwellenleiter 11, 12, 13, 14 befinden sich vor bzw. hinter der Zeichenebene. Die optische Leiterplatte 1 weist somit 4xn Wellenleiter auf, die ein zweidimensionales Wellenleiter-Array bilden. Sofern die Leiterplatte allgemein m Lagen von Wellenleitern aufweist, wobei m größer gleich 2 ist, so weist die Leiterplatte ein Wellenleiter-Array von mxn Wellenleitern auf.

Die einzelnen Wellenleiter sind in der optischen Leiterplatte 1 in an sich bekannter Weise bevorzugt integriert optisch ausgebildet.

Das Funktionselement 2 weist ebenfalls vier beabstandete Lagen von einem jeweils eindimensionalen Array von n Lichtwellenleitern 21, 22, 23, 24 auf, wobei die Schnittdarstellung der Figur 1 wiederum nur jeweils einen der Lichtwellenleiter 21, 22, 23, 24 jeder Lage zeigt. Sofern allgemein m-Lagen von Lichtwellenleitern vorgesehen sind, so weist auch das Funktionselement 2 ein Wellenleiter-Array mit mxn-Wellenleitern auf.

Bei dem Funktionselement 2 handelt es sich beispielsweise um einen Teil oder Teilbereich einer weiteren zweidimensionalen Leiterplatte, um einen Teil oder Teilbereich eines zweidimensionalen optischen Sende- und/oder Empfangsmoduls, um einen Teil oder Teilbereich einer elektrischen Baugruppe mit optischen Eingängen und/oder Ausgängen, oder um einen Teil oder Teilbereich einer Koppeleinheit, die mit einem weiteren Funktionselement verbunden ist.

Die Figur 1 geht auf die konkrete Ausbildung und die Funktionalität des Funktionselementes 2 bzw. von mit dem Funktionselement 2 verbundenen Modulen und Baugruppen nicht näher ein, da es vorliegend allein auf die Kopplung zwischen den jeweiligen Lichtwellenleiter der beiden zweidimensionalen Arrays von optischer Leiterplatte 1 und Funktionselement 2 ankommt. Es wird also im Folgenden allein die dargestellte Anordnung betrachtet, unabhängig von der Frage, wohin die jeweils dargestellten Wellenleiter führen und über welche Mechanismen Licht welcher Bauelemente und Module ein- und/oder ausgekoppelt wird. Die vorliegende Erfindung sieht diesbezüglich keinerlei Einschränkungen vor.

Die optische Leiterplatte 1 und das Funktionselement 2 sind derart zueinander angeordnet, dass die jeweiligen Lichtwellenleiter 11-14, 21-24 im Wesentlichen senkrecht zueinander verlaufen. Die optische Leiterplatte 1 weist eine Aussparung 13 auf, in die ein Teilbereich des Funktionselementes 2 hineinragt. Das Funktionselement 2 weist dabei seitliche Auflagebereiche 23 auf, mit denen es sich auf der planen Oberfläche 14 der optischen Leiterplatte 1 abstützt. Die Abstützung ist dabei lediglich schematisch dargestellt und kann auf vielfältige Weise erfolgen.

Dabei wird darauf hingewiesen, dass die Dicke der Leiterplatte 1 aufgrund von Toleranzen der Leiterplattenherstellungstechnik teilweise erheblich variieren kann. Es erfolgt daher nach Anbringen des Funktionselements 2 (und des bevorzugt mit diesem bereits verbundenen Koppelelements 3) an der Leiterplatte 1 bevorzugt zunächst eine Justage, insbesondere aktive Justage, in Bezug auf die Leiterplatte 1 zur Ausrichtung der jeweiligen Wellenleiter. Im justierten Zustand wird das Funktionselement 2 dann beispielsweise durch einen Kleber gegenüber der Leiterplatte 1 fixiert.

Die Aussparung 13 der Leiterplatte 1 legt das Wellenleiter-Array mit den 4xn-Wellenleitern 11-14 frei, wobei die Endflächen der Wellenleiter 11-14 senkrecht zur Oberfläche 14 der Leiterplatte stehen und im Wesentlichen senkrecht zur Längsausdehnung der Wellenleiter 11-14 verlaufen. Die Wellenleiter 11-14 des vierdimensionalen Arrays enden dabei an einer Stirnseite 15 der optischen Leiterplatte 1, die durch die Aussparung 13 bereitgestellt wird.

Es ist allerdings ebenfalls möglich, dass die Stirnseite 15 das seitliche Ende der optischen Leiterplatte angibt, wobei das Koppelelement 3 sich dann an das stirnseitige Ende der optischen Leiterplatte anschließen würde. Der in der Figur 1 dargestellte weitere Teilbereich 1' der Leiterplatte wäre für diesen Fall lediglich als Stützelement ohne Wellenleiter ausgebildet. Auch ist es möglich, dass bei einer Befestigung des Koppelelements 3 an einer Kante der Leiterplatte 1 dieses und das Funktionselement 2 einseitig an der Leiterplatte 1 befestigt werden, beispielsweise über einen verlängerten Auflagebereich 23.

In entsprechender Weise weist auch das Funktionselement 2 eine Stirnseite 24 auf, an der die Stirnflächen der Wellenleiter 21-24 des weiteren zweidimensionalen Wellenleiterarrays freiliegen.

Das Koppelelement 3 bewirkt nun eine optische Kopplung zwischen den Lichtwellenleitern 11-14 des zweidimensionalen Lichtwellenleiter-Arrays der optischen Leiterplatte 1 und den Lichtwellenleitern 21-24 des zweidimensionalen optischen Wellenleiter-Arrays des Funktionselementes 2, die winklig, im dargestellten Ausführungsbeispiel unter einem Winkel von 90° zueinander angeordnet sind. Alternativ kann auch ein anderer Winkel als 90° vorgesehen sein, wobei ein Winkel von 90° jedoch bevorzugt verwendet wird.

Das optische Koppelelement 3 ist gemäß der Figur 1 als separates Teil ausgebildet. Grundsätzlich kann es aber auch Teil des Funktionselementes 2 oder einer Koppeleinheit sein, das mit einem Funktionselement gekoppelt wird. Beispielsweise kann es einstückig mit dem Funktionselement 2 der Figur 1 ausgebildet sein, wobei dieses dann eine Koppeleinheit für ein weiteres Funktionselement wie ein optisches Modul oder eine elektrische Baugruppe darstellen kann.

Das Koppelelement 3 weist eine erste Ein-/Auskoppelfläche 33, die mit der Stirnseite 15 der optischen Leiterplatte 1 gekoppelt ist und eine zweite Ein-/Auskoppelfläche 34 auf, die mit der Stirnseite 24 des Funktionselementes 2 gekoppelt ist. Die beiden Ein-/Auskoppelflächen 33, 34 des Koppelelementes 3 sind dabei unter einem Winkel zueinander angeordnet, der dem Winkel entspricht, in dem die optische Leiterplatte 1 und das Funktionselement 2 zueinander angeordnet sind; im betrachteten Ausführungsbeispiel beträgt dieser Winkel somit 90°.

Das Koppelelement 3 weist weiter ein Array von 4 mal n, n ≥ 2, internen Wellenleitern 31 auf, die von der einen Ein-/Auskoppelfläche 33 sich zur anderen Ein-/Auskoppelfläche 34 des Koppelelementes 3 erstrecken und dabei unter einem Winkel von im Wesentlichen 45° zur Oberfläche 14 der optischen Leiterplatte 1 ausgerichtet sind. Die jeweiligen Endflächen der internen Wellenleiter 31 bilden dabei einen Winkel von 90° und liegen in der Ebene der jeweiligen Ein-/ Auskoppelfläche 31, 34.

Die internen Wellenleiter 31 bilden ein ebenfalls zweidimensionales Array von optischen Wellenleitern, das eine optische Kopplung zwischen sämtlichen Wellenleitern 11-14 der Leiterplatte 1 und sämtlichen Wellenleitern 21-24 des Funktionselementes 2 ermöglicht, wobei jeweils ein interner Wellenleiter 31 des Koppelelementes 3 einem Wellenleiter 11-14 der Leiterplatte und einem Wellenleiter 21-24 des Funktionselementes 2 zugeordnet ist.

Die Endflächen 311 der internen Wellenleiter 31 des Koppelelementes 3 bilden dabei an den Ein-/Auskoppelflächen 33, 34 ein Raster, das dem Raster der Wellenleiterarrays der Leiterplatte 1 und des Funktionselementes 2 entspricht. Bei senkrechter Ansicht bilden die Enden 311 der internen Wellenleiter 31 somit das gleiche Raster wie die Wellenleiter der Leiterplatte bzw. des Funktionselementes 2.

Die Wellenleiter 31 des Koppelelements 3 bestehen aus einem transparenten Material, beispielsweise einem Polymermaterial, welches an den Außenflächen vollständig metallisiert ist. Dies ist erforderlich, da das Licht aus den Wellenleitern 11-14, 21-24 der Leiterplatte 1 bzw. des Funktionselementes 2 unter einem großen Winkel, im dargestellten Ausführungsbeispiel von etwa 45°, in die internen Wellenleiter 31 eingekoppelt wird.

Bei Verwendung von herkömmlichen Wellenleitern mit einem Wellenleitermantel, der gegenüber einem Wellenleiterkern lediglich einen Brechungsindexsprung aufweist, wird bei diesen Einkoppelwinkeln in der Regel keine Totalreflexion und Wellenführung des Lichts erreicht. Die vorgesehene Verspiegelung an der Außenseite der Wellenleiter 31 ermöglicht, dass auch unter hohen Winkeln eingekoppeltes Licht eine Totalreflexion in den jeweiligen internen Wellenleitern 31 erfährt.

Zur Bereitstellung einer hohen Koppeleffizienz weisen die an den Ein-/Auskoppelflächen 33, 34 freiliegenden Endflächen 311 der internen Wellenleiter 31 einen Durchmesser auf, der im Wesentlichen dem Kerndurchmesser der Wellenleiter 11-14, 21-24 der Wellenleiterarrays der Leiterplatte 1 und des Funktionselementes 2 entspricht. Auf Grund der schrägen Führung der internen Lichtwellenleiter 31 gegenüber der Ein-/Auskoppelfläche 33, 34 sind die Wellenleiter selbst dabei innerhalb des Koppelelementes 3 mit einer gestauchten Form versehen, beispielsweise hochkant mit einem Durchmesser von 35*µ*m x 50*µ*m ausgebildet.

Von den Wellenleitern 21-24 des Funktionselements 2 wird Licht - beispielsweise eines zweidimensionalen Laserarrays - in vertikaler Richtung in die Wellenleiter 31 des Koppelelementes 3 eingekoppelt. Auf Grund der Verspiegelung der Wellenleiter 31 erfährt das eingekoppelte Licht in den Wellenleitern 31 trotz des großen Einkoppelwinkels eine Totalreflexion und wird je nach der Länge der Wellenleiter mehrfach reflektiert. Mit im Wesentlichen gleicher Winkelverteilung tritt das Licht an den Stirnflächen der Ein-/Auskoppelfläche 33 unter einem Winkel von 90° zur Einkoppelrichtung horizontal wieder aus und wird von dort in die Wellenleiter 11-14 des zweidimensionalen Wellenleiterarrays der Leiterplatte 1 eingekoppelt. Bei einer Einkopplung von Licht aus den Wellenleitern 11-14 der Leiterplatte 1 erfolgt eine Lichtumlenkung in umgekehrter Richtung.

Es ist vorteilhaft, wenn das Koppelelement 3 zusammen mit einem Verguss oder Kleber eingesetzt wird, der auch als Immersionsmittel wirkt. Ein solches Immersionsmittel übernimmt folgende Funktionen: erstens den Schutz der optischen Pfade vor Staub und Verschmutzung; zweitens einen optischen Ausgleich von Unregelmäßigkeiten an den Wellenleiterstirnflächen, die durch die begrenzte Qualität der Oberflächenbearbeitung der Leiterplatte vorliegen können (beispielsweise bei einem Ausfräsen der Aussparung 13 aus der optischen Leiterplatte 1); drittens eine Fixierung der Lage des Koppelelementes bzw. einer mit dem Koppelelement verbundenen Koppeleinheit.

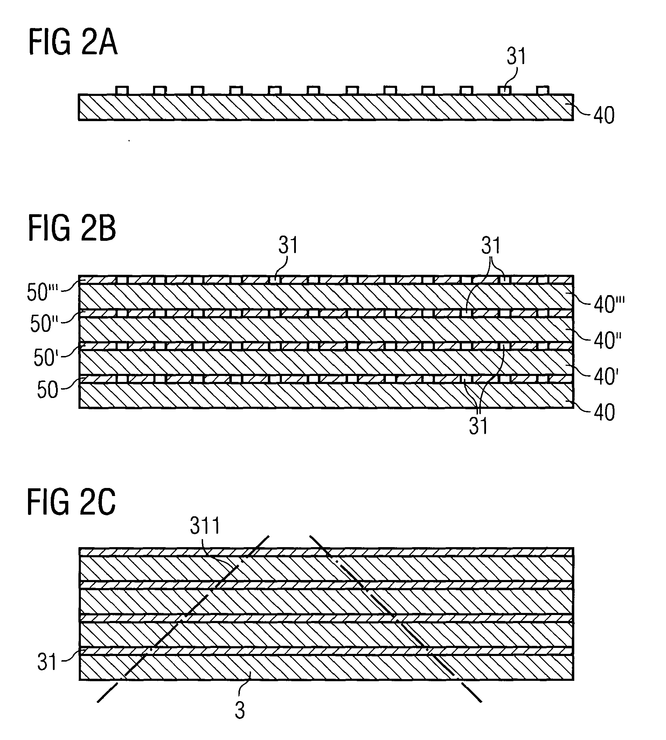

Ein mögliches Verfahren zur Herstellung des Koppelelementes 3 unter Verwendung planarer Strukturierungsverfahren ist in den Figuren 2a bis 2c dargestellt.

Zunächst werden gemäß der Figur 2a auf einem metallisierten Systemträger 40 Wellenleiter 31 mit den benötigten Dimensionen strukturiert, wobei, wie bereits erwähnt, die Wellenleiter bevorzugt eine gestauchte Ausbildung erhalten und beispielsweise Außenmaße von 35 *µ*m x 50 *µ*m aufweisen. Die Wellenleiter 31 werden anschließend großflächig metallisiert und bilden so ein eindimensionales, lineares Wellenleiterarray, bei dem jeder Wellenleiter 31 an allen Seiten von einer Metallisierung umgeben ist.

Wenn die Dicke des Systemträgers bzw. Wafers dem gewünschten vertikalen Abstand der Wellenleiter entspricht, können in weiteren Schritten weitere entsprechende Wellenleiterarrays mit Systemträgern übereinander geschichtet und zu einem zweidimensionalen Array verklebt werden. Die Figur 2b zeigt solche mehrere übereinander geschichtete Systemträger 40, 40', 40", 40"' mit jeweils einem eindimensionalen, linearen Wellenleiterarray mit Wellenleitern 31, die an allen Seiten von einer Metallisierung 50, 50', 50", 50"' umgeben sind.

Abschließend wird gemäß der Figur 2c die entstandene Struktur unter einem gewünschten Winkel von beispielsweise 45° geschnitten, wodurch das Koppelelement 3 mit den Wellenleitern 31 entsteht, das die endgültigen Koppelflächen bzw. Endflächen 311 der internen Wellenleiter bereitstellt. Dabei wird darauf hingewiesen, dass die Figur 2c anders als die Figuren 2a, 2b einen Schnitt parallel zu den Wellenleitern 31 darstellt.

## Patentansprüche

1. Optisches Koppelelement (3) zur stirnseitigen optischen Kopplung der Wellenleiter (11-14) eines ersten zweidimensionalen Wellenleiterarrays mit mxn Wellenleitern mit den Wellenleitern (21-24) eines zweiten zweidimensionalen Wellenleiterarrays mit mxn Wellenleitern, wobei m≥2 und n≥2 ist und wobei die stirnseitigen Enden (15, 24) der Wellenleiterarrays winklig zueinander angeordnet sind,
**dadurch gekennzeichnet, dass**
- das Koppelelement (3) eine erste Ein-/Auskoppelfläche (33), die mit dem stirnseitigen Ende (15) des ersten Wellenleiterarrays koppelbar ist und eine zweite Ein-/Auskoppelfläche (34), die mit dem stirnseitigen Ende (24) des zweiten Wellenleiterarrays koppelbar ist, aufweist,
- die erste Ein-/Auskoppelfläche (33) und die zweite Ein-/Auskoppelfläche (34) durch nxm im Inneren des Koppelelements verlaufende Wellenleiter (31) miteinander verbunden sind,
o deren Endflächen (311) an beiden Ein-/Auskoppelflächen (33, 34) entsprechend dem Raster der nxm Wellenleiter (11-14, 21-24) der beiden ankoppelbaren Wellenleiterarrays angeordnet sind, und
o die derart ausgebildet sind, dass in den Wellenleitern (31) geführtes Licht auch bei großen Einkoppelwinkeln von bis zu mindestens 45° beim Durchlaufen des Wellenleiters mehrfach eine Totalreflexion erfährt,
- wobei ein Wellenleiter (31) des Koppelelements jeweils einem Wellenleiterpaar (11, 21; 12, 22; 13, 23; 14, 24) des ersten und des zweiten Wellenleiterarrays zugeordnet ist.

2. Koppelelement nach Anspruch 1, **dadurch gekennzeichnet , dass** der Winkel zwischen der ersten und der zweiten Ein-/Auskoppelfläche (33, 34) 90° beträgt.

3. Koppelelement nach Anspruch 2, **dadurch gekennzeichnet , dass** die Wellenleiter (31) des Koppelelements (3) unter einem Winkel von 45° zu den Ein-/Auskoppelflächen (33, 34) verlaufen, wobei die jeweiligen Endflächen (311) einen Winkel von 90° bilden und in der Ebene der jeweiligen Ein-/Auskoppelfläche (33, 34) liegen.

4. Koppelelement nach mindestens einem der vorangehenden Ansprüche, **dadurch gekennzeichnet, dass** die Wellenleiter (31) des Koppelelemehts (3) jeweils entlang ihrer gesamten Länge eine umhüllende Verspiegelung (50, 50', 50'', 50''') aufweisen, so dass in den Wellenleitern (31) geführtes Licht im wesentlichen unabhängig vom Einkoppelwinkeln beim Durchlaufen des Wellenleiters mehrfach eine Totalreflexion erfährt.

5. Koppelelement nach Anspruch 4, **dadurch gekennzeichnet , dass** die Wellenleiter (31) des Koppelelements (3) aus einem transparenten Polymermaterial oder anderen transparenten Material bestehen, das an den Außenflächen entlang seiner gesamten Länge metallisiert ist.

6. Koppelelement nach mindestens einem der vorangehenden Ansprüche, **dadurch gekennzeichnet, dass** die Wellenleiter (31) des Koppelelements (3) im wesentlichen einen Durchmesser derart aufweisen, das ihre an den Ein-/Auskoppelflächen (33, 34) freiliegenden Endflächen (311) im wesentlichen einen Durchmesser aufweisen, der dem Kerndurchmesser der Wellenleiter (11-14; 21-24) der Wellenleiterarrays entspricht.

7. Koppelelement nach Anspruch 6, **dadurch gekennzeichnet , dass** die Wellenleiter (31) des Koppelelements (3) eine gestauchte Querschnittsform aufweisen.

8. Koppelelement nach mindestens einem der vorangehenden Ansprüche, **dadurch gekennzeichnet, dass** die Wellenleiter (31) des Koppelelements (3) parallel zueinander verlaufen.

9. Koppelelement nach mindestens einem der vorangehenden Ansprüche, **dadurch gekennzeichnet, dass** m gleich zwei und n gleich zwölf ist.

10. Optische Koppelanordnung mit
- einem ersten zweidimensionalen Wellenleiterarray mit mxn Wellenleitern (11-14),
- einem zweiten zweidimensionalen Wellenleiterarray mit mxn Wellenleitern (21-24), wobei m≥2 und n≥2 ist und die stirnseitigen Enden der Wellenleiterarrays winklig zueinander angeordnet sind,
**gekennzeichnet durch**
ein Koppelelement (3) zur stirnseitigen optischen Kopplung der Wellenleiter des ersten Wellenleiterarrays mit den Wellenleitern des zweiten Wellenleiterarrays, das gemäß Anspruch 1 ausgebildet ist.

11. Koppelanordnung nach Anspruch 10, **dadurch gekennzeichnet, dass** die erste Ein-Auskoppelfläche (33) mit der ersten ebenen Stirnseite (15) und die zweite Ein-/Auskoppelfläche (34) mit der zweiten ebenen Stirneite (24) gekoppelt ist.

12. Koppelanordnung nach Anspruch 11, **dadurch gekennzeichnet , dass** zwischen der ersten Ein-/Auskoppelfläche (33) und der ersten ebenen Stirnseite (15) und der zweiten Ein-/Auskoppelfläche (34) und der zweiten ebenen Stirneite (24) jeweils ein Immersionsmittel vorgesehen ist.

13. Koppelanordnung nach mindestens einem der Ansprüche 10 bis 12, **dadurch gekennzeichnet, dass** das Koppelelement (3) als separates Teil ausgebildet ist.

14. Koppelanordnung nach mindestens einem der Ansprüche 10 bis 12, **dadurch gekennzeichnet, dass** das Koppelelement Teil einer Koppeleinheit oder eines Funktionsteils ist, das das erste oder das zweite Wellenleiterarray umfasst.

15. Koppelanordnung nach mindestens einem der Ansprüche 10 bis 14, **dadurch gekennzeichnet, dass** das erste und/oder das zweite Wellenleiterarray realisiert sind in einer optischen Leiterplatte (1), in einem optischen Sende- oder Empfangsmodul mit zweidimensional angeordneten optischen Sendern oder Empfängern oder in einer elektrischen Baugruppe mit mit zweidimensional angeordneten optischen Ein- und/oder Ausgängen.
